(19) Europäisches Patentamt
European Patent Office
Office européen des brevets

(11) **EP 3 062 516 B1**

(12) **EUROPEAN PATENT SPECIFICATION**

(45) Date of publication and mention
of the grant of the patent:
**26.09.2018 Bulletin 2018/39**

(51) Int Cl.:
**H04N 13/254** (2018.01)

(21) Application number: **16156159.2**

(22) Date of filing: **17.02.2016**

(54) **PARALLAX IMAGE GENERATION SYSTEM, PICKING SYSTEM, PARALLAX IMAGE GENERATION METHOD, AND COMPUTER-READABLE RECORDING MEDIUM**

PARALLAXENBILDERZEUGUNGSSYSTEM, KOMMISSIONIERSYSTEM, PARALLAXENBILDERZEUGUNGSVERFAHREN UND COMPUTERLESBARES AUFZEICHNUNGSMEDIUM

SYSTÈME DE GÉNÉRATION D'IMAGE DE PARALLAXE, SYSTÈME DE PRÉLÈVEMENT, PROCÉDÉ DE GÉNÉRATION D'IMAGE DE PARALLAXE ET SUPPORT D'ENREGISTREMENT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2015 JP 2015035850**

(43) Date of publication of application:
**31.08.2016 Bulletin 2016/35**

(73) Proprietor: **Ricoh Company, Limited**
**Tokyo 143-8555 (JP)**

(72) Inventors:
• **SEKIGUCHI, Hiroyoshi**
**Ohta-ku, Tokyo 143-8555 (JP)**
• **OUCHIDA, Shigeru**
**Ohta-ku, Tokyo 143-8555 (JP)**
• **NAGASHIMA, Kenji**
**Ohta-ku, Tokyo 143-8555 (JP)**
• **WATANABE, Eita**
**Ohta-ku, Tokyo 143-8555 (JP)**

(74) Representative: **J A Kemp**
**14 South Square**
**Gray's Inn**
**London WC1R 5JJ (GB)**

(56) References cited:
**US-A1- 2015 022 644**

• LI Q ET AL: "Two-shot sparse depth estimation using adaptive structured light", ELECTRONIC LETTERS, THE INSTITUTION OF ENGINEERING AND TECHNOLOGY, vol. 47, no. 13, 23 June 2011 (2011-06-23) , pages 745-746, XP006039070, ISSN: 1350-911X, DOI: 10.1049/EL:20111093
• SPENRATH FELIX ET AL: "Object recognition: Bin-picking for industrial use", IEEE ISR 2013, IEEE, 24 October 2013 (2013-10-24), pages 1-3, XP032546571, DOI: 10.1109/ISR.2013.6695743 [retrieved on 2013-12-24]
• KITAMURA S ET AL: "Recognition and Cutting System of Sweet Pepper for Picking Robot in Greenhouse Horticulture", MECHATRONICS AND AUTOMATION, 2005 IEEE INTERNATIONAL CONFERENCE NIAGARA FALLS, ON, CANADA JULY 29-AUG 1, 2005, PISCATAWAY, NJ, USA,IEEE, vol. 4, 29 July 2005 (2005-07-29), pages 1807-1812, XP010913546, ISBN: 978-0-7803-9044-7

EP 3 062 516 B1

**Description**

The present invention relates generally to a parallax image generation system, a picking system, a parallax image generation method, and a computer-readable recording medium.

A technology for generating a parallax image (distance image) by obtaining the parallax value of each pixel by stereo matching processing using a stereo camera is known. The stereo matching processing is processing for obtaining the parallax value of each pixel by searching for corresponding pixels between an image (reference image) captured by one of two cameras in different image-capturing positions and an image (comparison image) captured by the other camera.

In most stereo matching processing, because pixels are associated with each other between the reference image and the comparison image by using a local change of luminance as a clue, if the object to be imaged has poor texture, there are many pixels for which parallax values cannot be obtained and accordingly it difficult to generate an accurate parallax image. For this reason, various technologies have been proposed in which texture is artificially applied to a subject by emitting a pattern to the objet to be imaged in order to make it easier to associate pixels between a reference image and a comparison image. For example, Japanese Laid-open Patent Publication No. 2001-91232 describes a technology in which multiple patterns are emitted while being switched to a subject to be imaged and a mismatching area (area where a parallax value cannot be obtained) in a parallax image generated by emitting a pattern is replaced with a parallax value of a parallax image generated by emitting another pattern.

US 2015/022644 discloses a method of depth map optimization using an adaptive structured light pattern is provided that includes capturing, by a camera in a structured light imaging device, a first image of a scene into which a pre-determined structured light pattern is projected by a projector in the structured light imaging device, generating a first disparity map based on the captured first image and the structured light pattern, adapting the structured light pattern based on the first disparity map to generate an adaptive pattern, wherein at least one region of the structured light pattern is replaced by a different pattern, capturing, by the camera, a second image of the scene into which the adaptive pattern is projected by the projector, generating a second disparity map based on the captured second image and the adaptive pattern, and generating a depth image using the second disparity map. LI Q ET AL: "Two-shot sparse depth estimation using adaptive structured light",ELECTRONIC LETTERS, THE INSTITUTION OF ENGINEERING AND TECHNOLOGY, vol. 47, no. 13, 23 June 2011 (2011-06-23), pages 745-746, XP006039070, ISSN:1350-91 IX discloses a low-cost two-shot approach employing a projector and a camera to recover an object's sparse shape. The algorithm is based on projecting a grid pattern of adaptive colours which vary with the object and then matching grid points between the projected pattern and the image captured under this adaptive structured light. Results show the performance of this adaptive colours approach is superior to using constant colours in shape recovery of real-world objects with strong colours and textures under ambient light conditions.

However, when the pattern emitted to the object to be imaged does not match the characteristics of the object, the number of pixels for which highly reliable parallax values (hereinafter, "valid parallax score") can be obtained (hereinafter, "the number of valid parallax points") decreases and thus an accurate parallax image cannot be obtained. Furthermore, the configuration in which multiple patterns are emitted while being switched increases like that described in Japanese Laid-open Patent Publication No. 2001-91232 increases the time required to acquire a parallax image.

SUMMARY OF THE INVENTION

It is an object of the present invention to at least partially solve the problems in the conventional technology.

According to a first aspect of the invention, there is provided a parallax image generation system as set out in claim 1.

According to a second aspect of the invention, there is provided a picking system as set out in claim 9.

According to a third aspect of the invention, a parallax image generation method as set out in claim 10.

According to a fourth aspect of the invention, a computer program as set out in claim 11.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a diagram illustrating a principle of calculating the distance to an object by using a stereo camera;
FIG. 2 is a diagram illustrating an overview of stereo matching processing;
FIG. 3 is a graph illustrating the relation between cost values and shift amounts of candidate pixels;

FIG. 4 is a diagram illustrating the relation between the light transmittance of objects and the granularity of patterns;

FIG. 5 is a schematic configuration diagram of a picking system according to an embodiment of the present invention;

FIG. 6 is a block diagram of an exemplary hardware configuration of the picking system according to the embodiment;

FIG. 7 is a block diagram of an exemplary functional configuration of the stereo camera and an information processing apparatus;

FIG. 8 is a block diagram of an exemplary detailed configuration of a parallax image generation unit;

FIG. 9 is a graph illustrating a method of calculating and integer parallax and a decimal parallax;

FIG. 10 is a graph representing the brightness distribution of each of a pattern optimum to objects having higher light transmittances and a pattern optimum to objects having lower light transmittances;

FIG. 11 is a diagram representing an exemplary pattern optimum to objects having higher light transmittances;

FIG. 12 is a diagram representing an exemplary pattern optimum to objects having lower light transmittances;

FIG. 13 is a flowchart illustrating the flow of operations of the picking system;

FIG. 14 is a block diagram illustrating the configuration of a first modification;

FIG. 15 is a block diagram illustrating the configuration of a second modification;

FIG. 16 is a block diagram illustrating the configuration of a third modification; and

FIG. 17 is a table representing an exemplary table stored in a pattern storage unit.

## DETAILED DESCRIPTION OF THE PREFERRED EMBODIMENTS

An embodiment of the parallax image generation system, the picking system, the parallax image generation method, and the computer-readable recording medium having a computer program according to the invention will be described in detail below with reference to the accompanying drawings.

A parallax image generation system according to the embodiment acquires object information reflecting the characteristics of an object to be imaged, selects a pattern corresponding to the acquired object information, and emits the pattern to the object. The parallax image generation system generates a parallax image from two or more captured images of the object to which the pattern is emitted. Generating a parallax image by emitting a pattern selected based on object information reflecting the characteristics of an object as described above enables generation of an accurate parallax image in a short time.

Principle of Measuring Distance

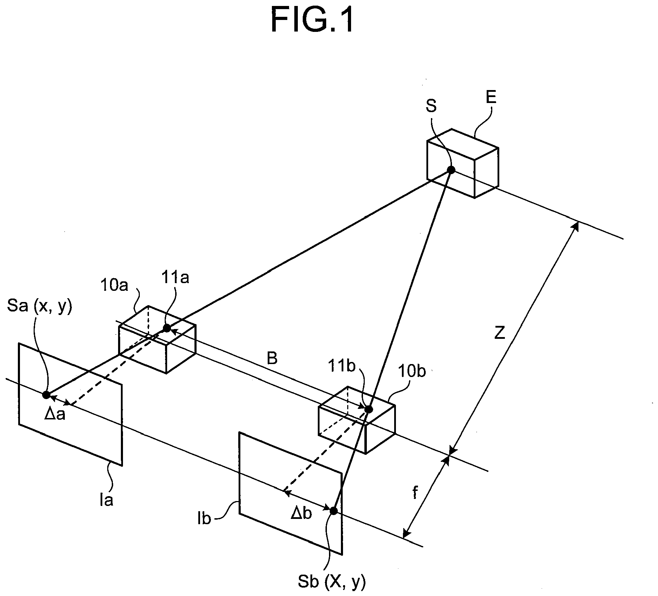

First, the principle of measuring a distance applied to the embodiment will be described with reference to FIG. 1. FIG. 1 is a diagram illustrating the principle of calculating the distance to an object by using a stereo camera. Here, a parallax value with respect to an object in the stereo camera is obtained by performing stereo matching processing and the distance from the stereo camera to the object is measured by using the parallax value. In order to simplify descriptions, descriptions will be given with an assumption that not matching for a predetermined area consisting of multiple pixels but matching on a pixel-by-pixel basis will be performed.

The stereo camera shown in FIG. 1 includes two image capturing units 10a and 10b disposed in parallel at the same level. The image capturing units 10a and 10b respectively include lenses 11a and 11b for forming an image of an object E to be imaged on image sensors. The image captured by the image capturing unit 10a (luminance image) is referred to as a reference image Ia and the image captured by the image capturing unit 10b (luminance image) is referred to as a comparison image Ib.

According to FIG. 1, the point S on the object E in a three-dimensional space is imaged in a position on a straight line parallel with a line connecting the lens 11a and the lens 11b in each of the reference imag Ia and the comparison image Ib. It is assumed that the position in which the point S on the object E is imaged in the reference image Ia is Sa(x,y) and the position in which the point S on the object E is imaged in the comparison image Ib is Sb(X, y). Here, using the coordinate value of the point Sa(x,y) in the reference image Sa and the coordinate value of the point Sb(X,y) in the comparison image Sb, the parallax value dp is represented according to the following Equation (1).

$$dp = X - x \qquad\qquad (1)$$

Provided the distance between the point Sa(x,y) in the reference image Ia and the intersection of the line from the image-capturing lens 11a perpendicular to the image-capturing surface is $\Delta a$ and the distance between the point Sb(X,y) in the comparison image Ib and the intersection of the line from the image-capturing lens 11b perpendicular to the imaging surface is $\Delta b$, the parallax value dp can be represented also as dp=$\Delta a$+$\Delta b$.

With the parallax value dp, the distance Z between the stereo camera and the object E can be calculated. The distance Z is the distance from the straight line connecting the focal position of the lens 11a and the focal position of the lens 11b to the point S on the object E. As shown in FIG. 1, using the focal length f of the image-capturing lenses 11a and 11b, the base line length B that is the length between the image-capturing lens 11a and the image-capturing lens 11b, and the parallax value db, the distance Z can be calculated according to the following Equation (2).

$$Z=(B×f)/dp \qquad\qquad (2)$$

As can be seen from Equation (2), the distance Z decreases as the parallax dp increases, and the distance Z increases as the parallax value dp decreases.

Stereo Matching Processing

An overview of stereo matching processing for calculating a corresponding pixel in the comparison image Ib with respect to the reference image Ia will be described here. The corresponding pixel refers to the pixel in the comparison image Ib most similar to a pixel in the reference image Ia (hereinafter, "reference pixel"). In stereo matching processing, for each candidate of the corresponding pixel in the comparison image Ib, a cost value C representing non-similarity to the reference pixel is calculated and the candidate with the smallest cost value C is obtained as the corresponding pixel. If the corresponding pixel corresponding to the reference pixel is obtained uniquely, a highly reliable parallax value dp can be calculated for that pixel according to, for example, Equation (1). The parallax image is an image representing the reference pixel by the parallax value dp. For this reason, the larger the number of reference pixels for which highly reliable parallax values dp (valid parallax) can be calculated (the valid parallax score) is, the more the parallax image is accurate. For a reference pixel for which valid parallax cannot be calculated, for example, a parallax image is configured where the parallax value dp is "0".

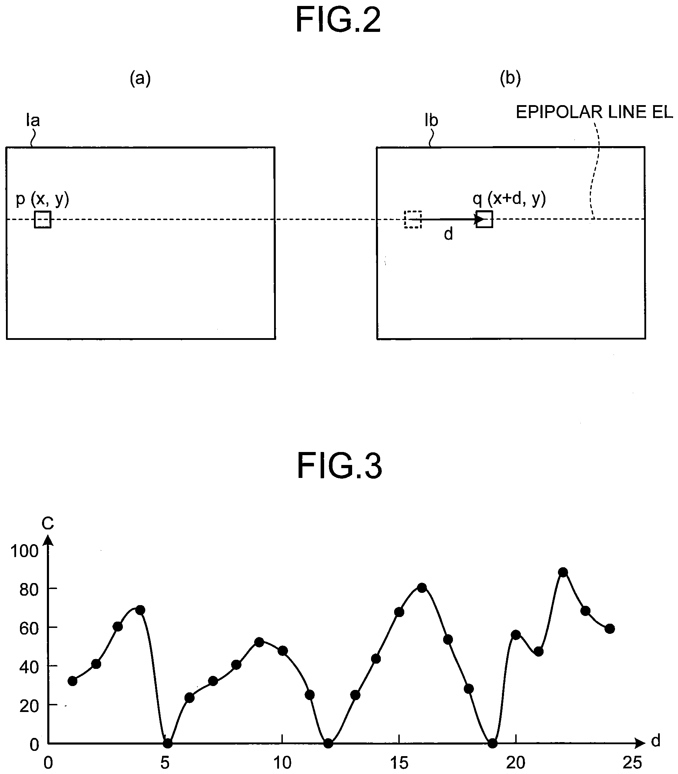

FIG. 2 is a diagram illustrating an overview of the stereo matching processing. A section (a) in FIG. 2 is a schematic view representing p(x,y) that is an example of a reference pixel p in the reference image Ia, and a section (b) of FIG. 2 is a schematic view representing q(x+d,y) that is an example of a candidate of a corresponding pixel (hereinafter "candidate pixel") in the comparison image Ib corresponding to the reference pixel p(x,y) shown in the section (a) of FIG. 2. As shown in FIG. 2, a cost value C(p,d) of each candidate pixel q(x+d,y) is calculated by obtaining a luminance of each candidate pixel q(x+d,y) on an epipolar line EL in the comparison image Ib corresponding to the reference pixel p(x,y) and comparing the luminance value with the luminance value of the reference pixel p(x,y), where d is the amount of shift (shift amount) of the candidate pixel q with respect to the reference pixel p and represents the amount of shift on a pixel-by-pixel basis. In other words, according to FIG. 2, while the candidate pixel q(x+d,y) is being shifted sequentially by each pixel within a pre-specified area (for example, 0<d<25), the cost value C(p,d) representing non-similarity between the candidate pixel q(x+d,y) and the reference pixel p(x,y) is calculated.

As described above, because the image capturing units 10a and 10b are disposed in parallel at the same level, the corresponding pixel in the comparison image Ib corresponding to the reference pixel p in the reference image Ia is on the epipolar line EL shown in FIG. 2. For this reason, it suffices if the pixels on the epipolar line EL in the comparison image Ib are searched in order to obtain the corresponding pixel in the comparison image Ib.

The cost value C calculated as described above can be represented in relation to the shift amount d in a graph like that show in FIG. 3. In the example shown in FIG. 3, because the cost value C is "0" when the shift amount d is 5, 12, or 19, the smallest value of the cost value C cannot be obtained. For example, when an object with poor texture is to be imaged, because there are many candidate pixels q having the same luminance value as that of a reference pixel p, it is difficult to obtain the smallest cost value C. As a result, the corresponding pixel corresponding to the reference pixel p cannot be uniquely specified (mismatching occurs) so that a reliable parallax value dp cannot be calculated.

Such a problem can be recovered by artificially applying texture by emitting a pattern to an object to be imaged. The "texture" herein refers to design, pattern, color, dot, etc., that can appear as brightness and darkness of various pixels on an image. The pattern to be emitted to the object is preferably a pattern having multiple sets of brightness or a two-dimensional random-number pattern. Note that a pattern with repetitive cycles is not preferable because the cost value C may be repeated.

It has been studied that the optimum pattern to be emitted to the object differs depending on the characteristics of the object. For example, when a pattern having too fine granularity is emitted to an object having a high light transmittance, the texture may disappear due to the effect of interference between light that is diffused and reflects on the surface of the object and light that is transmitted through the object and diffused and reflects on another surface of the object. As a result, similar luminance values tend to be arrayed in the searching direction in the stereo matching processing and the valid parallax score decreases and thus the accuracy of the parallax image decreases. Furthermore, for example, when a pattern with too high contrast is emitted to an object having a low light transmittance, because the amount of light reflecting on the surface of the object is large, the luminance values of the pixels corresponding the texture with higher brightness may be saturated. Accordingly, the number of pixels for which correct luminance values cannot be obtained increases, the valid parallax score decreases, and accordingly the accuracy of the parallax image lowers.

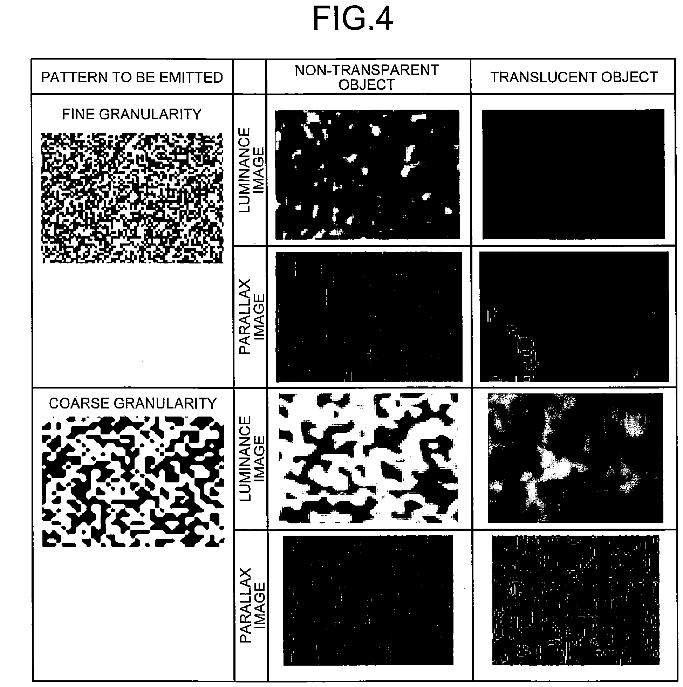

FIG. 4 is a diagram illustrating the relation between the light transmittance of objects and the granularity of patterns. FIG. 4 shows luminance images (reference images or comparison images) and parallax images obtained when a pattern having fine granularity is emitted to a non-transparent object that is an object having a low light transmittance and a translucent object that is an object having a high light transmittance and luminance images and parallax images obtained when a pattern having coarse granularity is emitted to the non-transparent object and the translucent object. For convenience, in the parallax images shown in FIG. 4, pixels from which valid parallax is obtained is represented in gray and pixels from which no valid parallax is obtained is represented in black.

As shown in FIG. 4, in the case where the object to be imaged is a non-transparent object, when a pattern having fine granularity is emitted, the valid parallax score in the parallax image is larger than that obtained when a pattern having coarse granularity is emitted, which leads to an accurate parallax image. On the other hand, in the case where an object to be imaged is a translucent object, when a pattern having fine granularity is emitted, the luminance image blurs and the texture disappears and accordingly the valid parallax score of the parallax image significantly decreases. Meanwhile, when a pattern having coarse granularity is emitted, the texture remains as a lump and thus the valid parallax score increases, which leads to an accurate parallax image.

As represented in the above example, the pattern optimum to obtain an accurate parallax image differs depending on the characteristics, such as the transmittance of an object to be imaged. As a method of emitting an optimum pattern matching the characteristics of the object to be imaged, there is a method of searching for an optimum pattern by evaluating parallax images while switching between multiple patterns, but this method requires a longer time to obtain an accurate parallax image. According to the embodiment, acquiring object information reflecting the characteristics of the object to be imaged, selecting a pattern corresponding to the acquired object information from predetermined multiple patterns, and then emitting the pattern to the object enables generation of an accurate parallax image in a short time.

Picking System

As an example of a specific system using the parallax image generation system according to the embodiment, a picking system in, for example, an assembly plant will be described here. The picking system automatically recognizes an object, such as a part, a semi-finished product, or a finished product, conveyed from the previous process and performs picking on the object by using a robot arm. The picking system captures images of an object to be imaged that is conveyed, for example, in the state of being placed or in a bulk on a conveyance tray, from the previous process by, for example, a belt conveyer, generates a parallax image, recognizes the three-dimensional position of the object based on the parallax image, and performs picking (grasps (picks up) the object). The picking system emits an optimum pattern matching the characteristics of an object subjected to picking to the object and captures images of the object by using the stereo camera, thereby generating an accurate parallax image in a short time, which shortens the takt time of the picking operation.

Whole Configuration

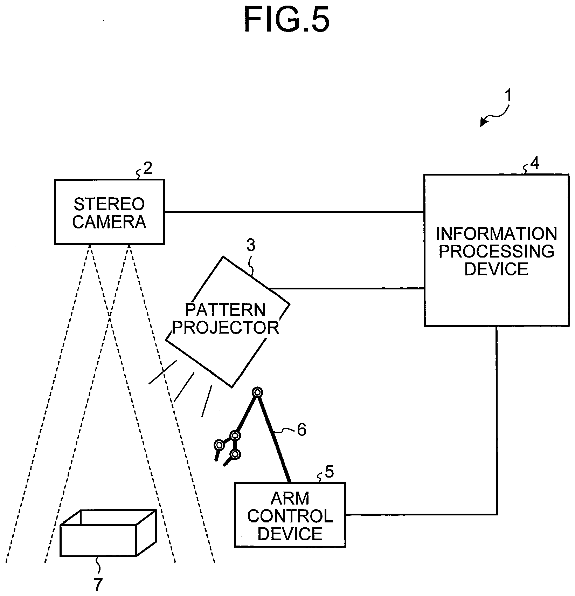

FIG. 5 is a schematic configuration diagram of a picking system 1 according to the embodiment. As illustrated in FIG. 5, the picking system 1 includes a stereo camera 2, a pattern projector 3 (an example of a pattern emission unit), an information processing device 4, and an arm control device 5 (an example of a picking unit).

The stereo camera 2 captures images of an object to be imaged with two image capturing units, generates a parallax image from two captured images (luminance images) serving as a reference image and a comparison image as described above, and outputs the parallax image. The functions of the stereo camera 2 will be described in detail below. The stereo camera 2 may be configured to capture images of the object by using three or more image capturing units to generate a parallax image, but the stereo camera 2 is configured to include two image capturing units in the embodiment.

The pattern projector 3 emits a pattern to the object to be imaged and gives texture to the object. According to the embodiment, the pattern emitted by pattern projector 3 to the object is a pattern selected based on the object information reflecting the characteristics of the object. By emitting the pattern selected based on the object information and then capturing an image of the object with the stereo camera 2 leads to generation of an accurate parallax image. The pattern projector 3 also has a function of emitting object information light to on object in order to acquire object information.

The information processing device 4 performs object recognition processing using the parallax image and the luminance image generated by the stereo camera 2. The information processing device 4 further has a function of acquiring object information and selecting an optimum pattern to be emitted by the pattern projector 3. The functions of the information processing device 4 will be described in detail below.

The arm control device 5 controls the operation of a robot arm 6 that is an articulated robot based on the result of recognition of the object by the information processing device 4 and performs picking of objects in a conveying tray 7.

Hardware Configuration

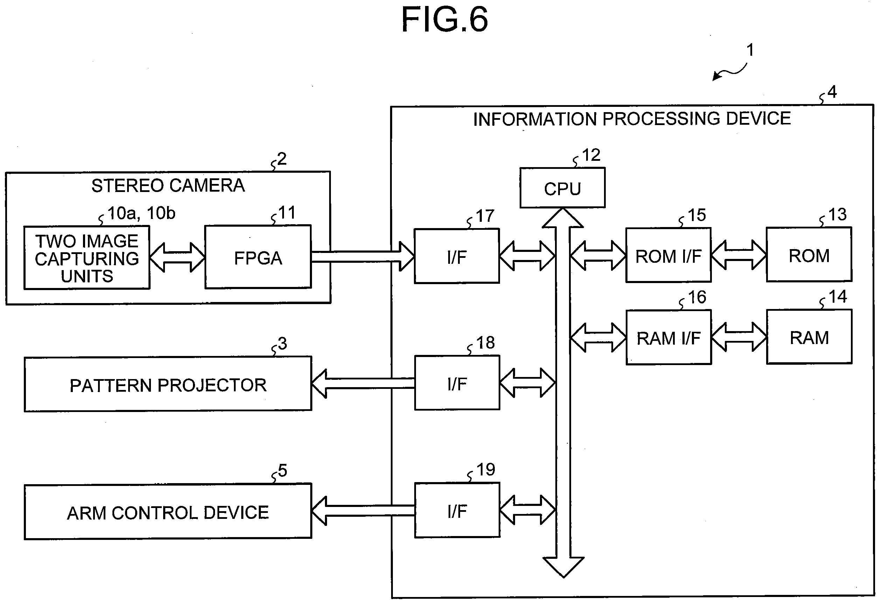

FIG. 6 is a block diagram of an exemplary hardware configuration of the picking system 1 according to the embodiment. As shown in FIG. 6, the stereo camera 2 includes the two image capturing units 10a and 10b and a field programmable gate array (FPGA) 11. A program for generating a parallax image from images captured by the two image capturing units 10a and 10b is implemented in the FPGA 11.

As shown in FIG. 6, the information processing device 4 is configured as a universal computer device including a CPU 12, a ROM 13, a RAM 14, the ROM I/F 15, a RAM I/F 16, and I/Fs 17 to 19. The CPU 12 is a computing device that implements computations for implementing various functions of the information processing device 4. The ROM 13 is a non-volatile memory that stores the program and data. The RAM 14 is a main memory used as a work area for executing the program. The RAM 14 is used also as an image memory that temporarily stores the captured images (luminance images) and the parallax image that are transmitted from the stereo camera 2 to the information processing device 4.

The ROM I/F 15 is an interface for the CPU 12 to access the ROM 13. The RAM I/F 16 is an interface for the CPU 12 to access the RAM 14. The I/Fs 17 to 19 are interfaces for connecting the information processing device 4 to the stereo camera 2, the pattern projector 3, and the arm control device 5. A mass storage, such as a hard disk device, may be incorporated in the information processing device 4 or provided as an external device.

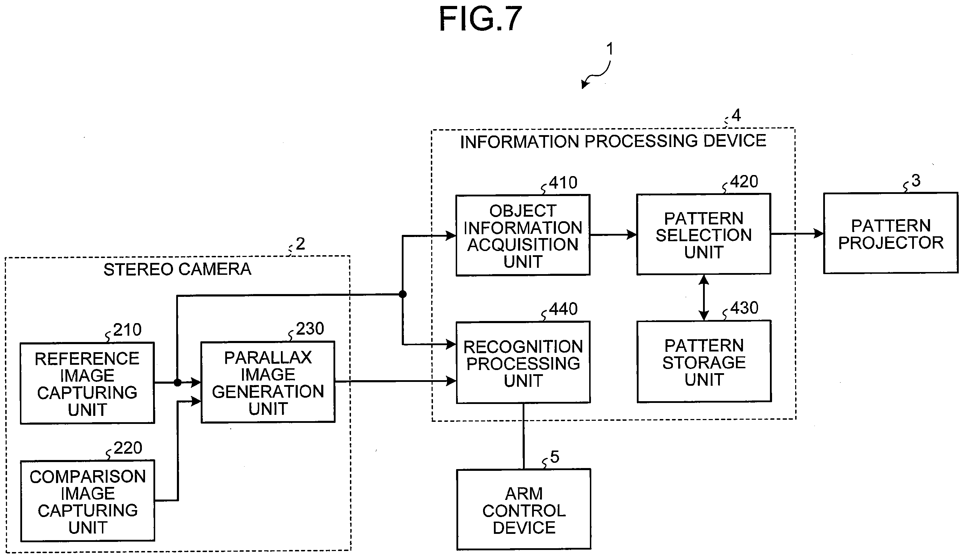

The main functions of the information processing device 4 are implemented by the CPU 12 by executing the program stored in the ROM 13 or the hard disk device and using the RAM 14 as a work area. For example, the functions of the object information acquisition unit 410 and a pattern selection unit 420 (see FIG. 7) are implemented in the following manner. According to the commands of the control flow of the program read from the ROM 13 or the hard disk device, the CPU 12 acquires a luminance image of an object captured when light for acquiring object information is emitted from the pattern projector 3 to the object from the stereo camera 2. The CPU 12 evaluates the acquired luminance image, calculates an evaluation value, and selects a pattern corresponding to the evaluation value of the luminance image from among multiple patterns that are stored in a pattern storage unit 430 (see FIG. 7) realized by the ROM 13 or the hard disk device.

Functional Configuration of Stereo Camera and Information Processing Device

FIG. 7 is a block diagram of an exemplary functional configuration of the stereo camera 2 and the information processing device 4. As shown in FIG. 7, the stereo camera 2 includes a reference image capturing unit 210 (first image capturing unit), a comparison image capturing unit 220 (second image capturing unit), and a parallax image generation unit 230 (generation unit) that is realized by the FPGA 11. The information processing device 4 includes, as the functional components realized by the CPU 12 by executing the program, an object information acquisition unit 410 (acquisition unit), the pattern selection unit 420 (selection unit), and a recognition processing unit 440 (recognition unit). The information processing device 4 includes the pattern storage unit 430 that is realized by the ROM 13 or the hard disk device.

The reference image capturing unit 210 captures an image of the object to be imaged and outputs, as a captured image, a luminance image serving as the above-described reference image Ia. The comparison image capturing unit 220 captures an image of the object to be imaged from a position different from that of the reference image capturing unit 210 and outputs, as a captured image, a luminance image serving as the above-described comparison image Ib. The luminance images from the reference image capturing unit 210 and the comparison image capturing unit 220 are input to the parallax image generation unit 230. The luminance image (the reference image Ia) from the reference image capturing unit 210 is input also to the recognition processing unit 440 of the information processing device 4. Furthermore, the luminance image obtained by the reference image capturing unit 210 by capturing an image of the object to which the light for obtaining object information is emitted is input to the object information acquisition unit 410 of the information processing device 4.

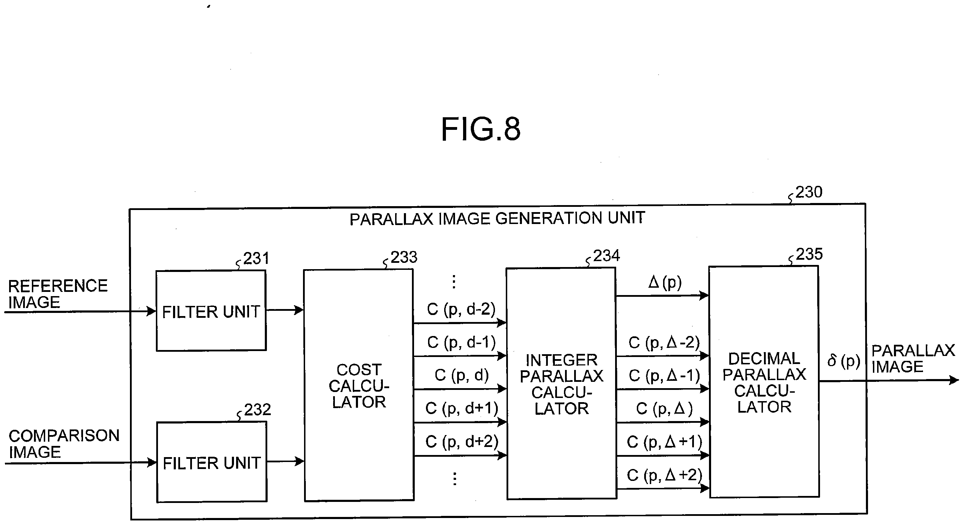

Using the luminance image (the reference image Ia) from the reference image capturing unit 210 and the luminance image (the comparison image Ib) from the comparison image capturing unit 220, the parallax image generation unit 230 generates a parallax image. FIG. 8 is a block diagram of an exemplary detailed configuration of the parallax image generation unit 230. As shown in FIG. 8, the parallax image generation unit 230 includes filter units 231 and 232, a cost calculator 233, an integer parallax calculator 234, and a decimal parallax calculator 235.

Each of the filter units 231 and 232 performs filtering processing for removing noise and enhancing higher frequencies on the luminance image (the reference image Ia) from the reference image capturing unit 210 and the luminance image (the comparison image Ib) from the comparison image capturing unit 220.

As described above, the cost calculator 233 calculates a cost value C of each candidate pixel q on the basis of the luminance value of the reference pixel p in the reference image Ia and the luminance value of each candidate pixel q in the comparison image Ib. For the method of calculating a cost value C by the cost calculator 233, it is possible to use a known method, such as sum of absolute difference (SAD), sum of squared difference (SSD), or normalized cross-correlation (NCC).

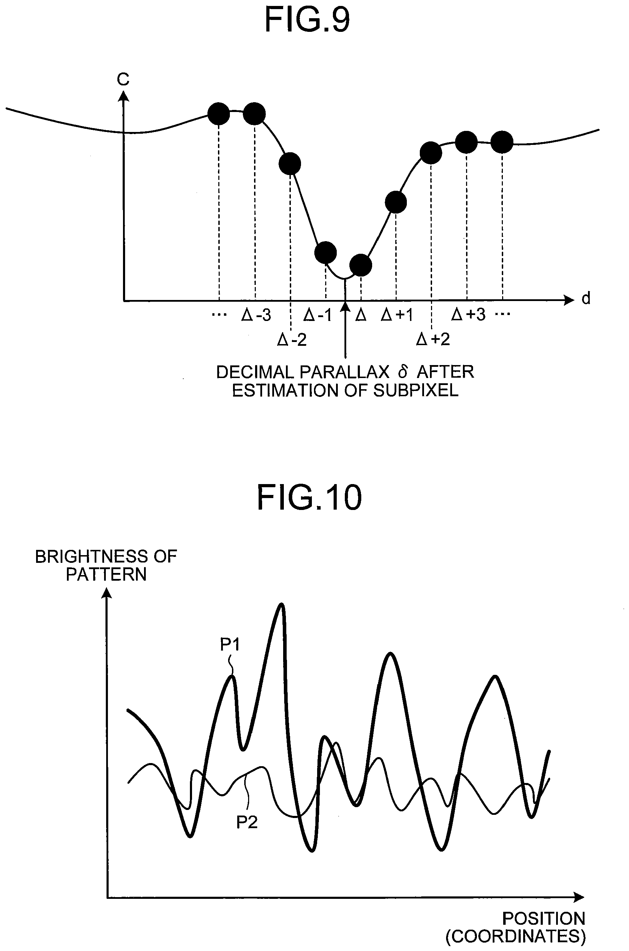

The integer parallax calculator 234 and the decimal parallax calculator 235 calculates a parallax value dp of each subpixel smaller than a pixel on the basis of the cost value C of each candidate pixel q calculated by the cost calculator 233. Hereinafter, the parallax value dp calculated on a pixel-by-pixel basis will be referred to as an integer parallax $\Delta$ and the parallax value dp calculated on a subpixel-by-subpixel basis will be referred to as an a decimal parallax $\delta$. FIG. 9 is a diagram illustrating a method of calculating an integer parallax $\Delta$ and a decimal parallax $\delta$.

As shown in FIG. 9, the integer parallax calculator 234 searches for the shift amount d at which the cost C calculated for each candidate pixel q (i.e., each shift amount d with respect to the reference pixel p) is the smallest. The value of the shift amount d at which the cost value C is the smallest is calculated as an integer parallax $\Delta$. The decimal parallax calculator 235 calculates a decimal parallax $\delta$ shown in FIG. 9 by using a subpixel estimation method in order to pursue the parallax value dp to decimal. For example, in an isometric linear technique, the decimal parallax $\delta$ is calculated using the three cost values C corresponding to three candidate pixels in total that are the integer parallax $\Delta$ calculated by the integer parallax calculator 234 and serving as the center parallax, $\Delta$-1 smaller than $\Delta$ in the value of d by 1, and $\Delta$+1 larger than $\Delta$ in the value of d by 1. In a parabolic fitting technique or an approximation technique using a polynomial, a decimal parallax $\delta$ may be calculated by using the above-described three cost values C, or a decimal parallax $\delta$ may be calculated by using five cost values C corresponding to $\Delta$-2, $\Delta$-1, $\Delta$, $\Delta$+1, and $\Delta$+2 shown in FIG. 9. Alternatively, a decimal parallax $\delta$ may be calculated by using a preferable subpixel estimation method.

In the parallax image generation unit 230, for each reference pixel p in the reference image Ia, the cost calculator 233 calculates a cost value C of a candidate pixel q and the integer parallax calculator 234 and the decimal parallax calculator 235 calculate a decimal parallax $\delta$. Accordingly, a parallax image representing three-dimensional information on the object is generated. Note that the parallax image generation unit 230 may include a pre-processor that performs processing, such as distortion correction processing, on the reference image Ia input from the reference image capturing unit 210 and the comparison image Ib input from the comparison image capturing unit 220. Because the distortion state of the reference image Ia and the comparison image Ib may have a great effect on the result of the cost values C calculated by the cost calculator 233, it is effective to perform distortion correction processing before the cost values C are calculated. When the reference image Ia and the comparative image Ib are different from each other in optical axis deviation between lens and sensor in the reference image capturing unit 210 and the comparison image capturing unit 220 or in the optical distortion state of lens, it is effective to take a measure, such as holding a distortion correction parameter for correcting the distortion in the pre-processor and reflecting the calibration result to the correction parameter.

FIG. 7 will be referred back here. The object information acquisition unit 410 acquires object information reflecting the characteristics of an object subjected to picking, i.e., an object to be imaged by the stereo camera 2. According to the embodiment, it is assumed that object information reflecting the light transmittance of the object (or the characteristic value by which the light transmittance is substituted, such as reflectivity) is acquired as the characteristics of the object. For the object information, it is possible to use the luminance image of the object captured by the reference image capturing unit 210 (or the comparison image capturing unit 220) of the stereo camera 2 in the state where light having certain uniform brightness without brightness distribution is being emitted as light for acquiring object information from the pattern projector 3 to the object.

In the luminance image of the object to which the light for acquiring object information is emitted, the pixel value of an area in which the object is imaged is the value reflecting the light transmittance of the object. In other words, as the light transmittance of the object lowers, the light reflecting on the surface of the object is intensified and accordingly the pixel value of the luminance image increases, while, as the light transmittance of the object increases, the light reflecting on the surface of the object is weakened and accordingly the pixel value of the luminance image decreases. When such a luminance image of an object is used as object information, it is preferable that a material that absorbs light (such as a black curtain) be set on the part serving as the background of the object (such as the bottom part of the conveying tray 7 in the case where the object is placed in the conveying tray 7 as shown in FIG. 5). Accordingly, reflection on the part serving as the background of the object is reduced so that the area in which the object is imaged can be easily specified from the luminance image, and the light transmitted through the object is absorbed in the part serving as the background so that the captured image reliably reflecting the light transmittance of the object can be acquired.

For example, before the picking system 1 starts the object picking operation, or when the object subjected to picking is switched, the object information acquisition unit 410 outputs a control command of an instruction for emitting light for acquiring object information to the pattern projector 3 and outputs a control command of an instruction for capturing a luminance image to the stereo camera 2. Once the luminance image of the object to which light for acquiring object information is emitted from the pattern projector 3 is output from the reference image capturing unit 210 of the stereo camera 2, the object information acquisition unit 410 acquires the luminance image output from the reference image acquiring unit 210 as the object information. The luminance image acquired by the object information acquisition unit 410 as the object information is passed to the pattern selection unit 420.

The pattern selection unit 420 specifies the area in which the object is imaged from the luminance that is acquired as object information by the object information acquisition unit 410 and calculates the evaluation value of the luminance image from the pixel values of the area. For example, the pattern selection unit 420 obtains an average of the pixel values of the area in which the object is imaged in the luminance image and calculates the inverse of the average as the evaluation value of the luminance image. The pattern selection unit 420 selects a pattern corresponding to the calculated evaluation value from among the multiple patterns previously stored in the pattern storage unit 430. The evaluation value calculated from the luminance image is the value reflecting the light transmittance of the object. Accordingly, the pattern selection unit 420 selects a pattern optimum as a pattern to be emitted to the object having the light transmittance corresponding to the evaluation value from among the multiple patterns previously stored in the pattern storage unit 430.

The pattern storage unit 430 stores multiple patterns in which the granularity and contrast are optimized according to the light transmittance of objects. The optimum granularity and contrast of the patterns according to the light transmittance of objects are previously obtained by experiments, etc. In order to simplify the descriptions, only two patterns, a pattern optimum to objects having higher light transmittances and a pattern optimum to objects having lower light transmittances, will be described. Note that it suffices if the pattern storage unit 430 stores multiple patterns according to the light transmittance of objects that may be subjected to picking, i.e., the pattern storage unit 430 may store three or more patterns.

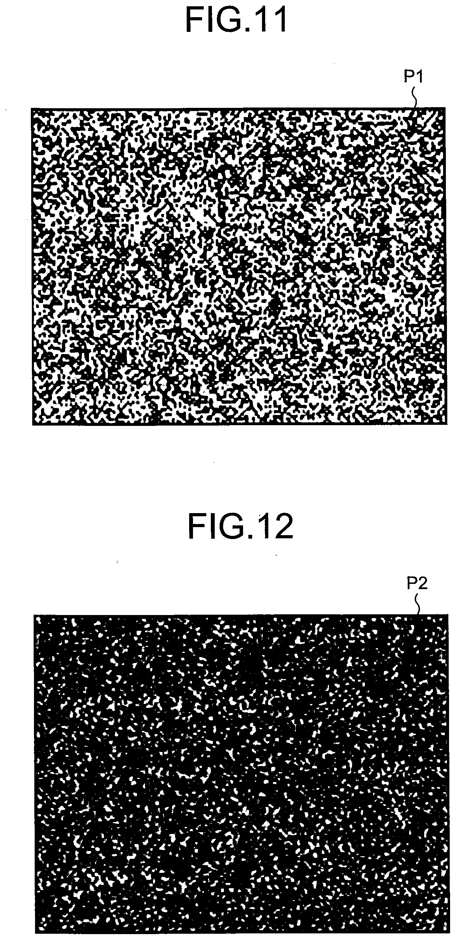

FIG. 10 is a graph representing the brightness distribution of each of a pattern P1 optimum to objects having higher light transmittances and a pattern optimum to objects having lower light transmittances. FIG. 11 is a diagram representing an example of the pattern P1 optimum to objects having higher light transmittances, and FIG. 12 is a diagram representing an example of the pattern P2 optimum to objects having lower light transmittances.

As shown in FIGS. 10 to 12, the pattern P1 optimum to objects having higher light transmittances has granularity more coarse than that of the pattern P2 optimum to objects having lower light transmittances and the pattern P1 has a contrast higher than that of the pattern P2. When a pattern having fine granularity is emitted to an object having a higher light transmittance, the texture disappears and the valid parallax score decreases as described above. When a pattern having a low contrast is emitted to an object having a higher light transmittance, the contrast of the luminance image further lowers and the texture accordingly disappears, so that the valid parallax score decreases. For this reason, the pattern P1 optimum to objects having higher light transmittances has granularity more coarse than that of the pattern P2 optimum to objects having lower light transmittances and has a contrast higher than that of the pattern P2. On the other hand, emission of a pattern having fine granularity to an object having a higher light transmittance increases the valid parallax score of the parallax image. Emission of a pattern having a high contrast to an object having a lower light transmittance increases the number of pixels whose pixel values (luminance values) saturate in a luminance image as described above, which reduces the valid parallax score of the parallax image. For this reason, the pattern P2 optimum to objects having lower light transmittances has granularity more fine than that of the pattern P1 optimum to objects having higher light transmittances and has a contrast lower than that of the pattern P1.

For example, when the evaluation value (the value reflecting the light transmittance of the object) calculated from the luminance image acquired as the object information by the object information acquisition unit 410 is higher than a predetermined threshold, the pattern selection unit 420 selects, for example, the pattern P1 exemplified in FIG. 11 from among the multiple patterns stored it the pattern storage unit 430. When the calculated evaluation value is equal to or smaller than the threshold, the pattern selection unit 420 selects the pattern P2 exemplified in FIG. 12. When three or more patterns are stored in the pattern storage unit 430, it suffices if two or more thresholds are set and used as references respectively for selecting the patterns.

When the pattern selection unit 420 selects a pattern, an image of the selected pattern is transferred from the information processing device 4 to the pattern projector 3. Accordingly, the pattern projector 3 emits the pattern optimum to generate an accurate parallax image to the object. The stereo camera 2 then captures images of the object to which the optimum pattern is emitted, generates a parallax image, and transmits the generated parallax image and the reference image Ia to the recognition processing unit 440. The parameters, such as granularities and contrasts of patterns, may be stored in the pattern selection unit 420 and the parameters of a selected pattern may be transferred from the information processing device 4 to the pattern projector 3, and the pattern projector 3 may generate an image of the pattern based on the transferred parameters and emit the image.

For the method of experimentally obtaining the granularity and contrast optimum to patterns according to the light transmittance of objects, for example, a method may be used in which a pattern is emitted to objects having different light transmittances while changing the granularity and contrast and, for each object, a granularity and a contrast of a pattern with which the valid parallax score is maximized are obtained. Obtaining the optimum granularity and contrast of the pattern for each of objects that may be subjected to picking enables previous determination of an optimum pattern for each object that may be subjected to picking and storage of the pattern in the pattern storage unit 430. Storing the optimum patterns corresponding to the respective objects in the pattern storage unit 430 in association with the threshold set on the basis of the evaluation value of the luminesce image of the object to which the light for acquiring object information is emitted as described above enables selection of an optimum pattern matching the characteristics of an object.

FIG. 7 will be referred back here. The recognition processing unit 440 recognizes the shape, position, and distance of an object imaged by the stereo camera 2 on the basis of the reference image Ia and the parallax image output by the stereo camera 2. The result of recognition performed by the recognition processing unit 440 is transmitted to the arm control device 5. According to the result, the arm control device 5 controls the operations of the robot arm 6 to perform object picking.

Operations of Picking System

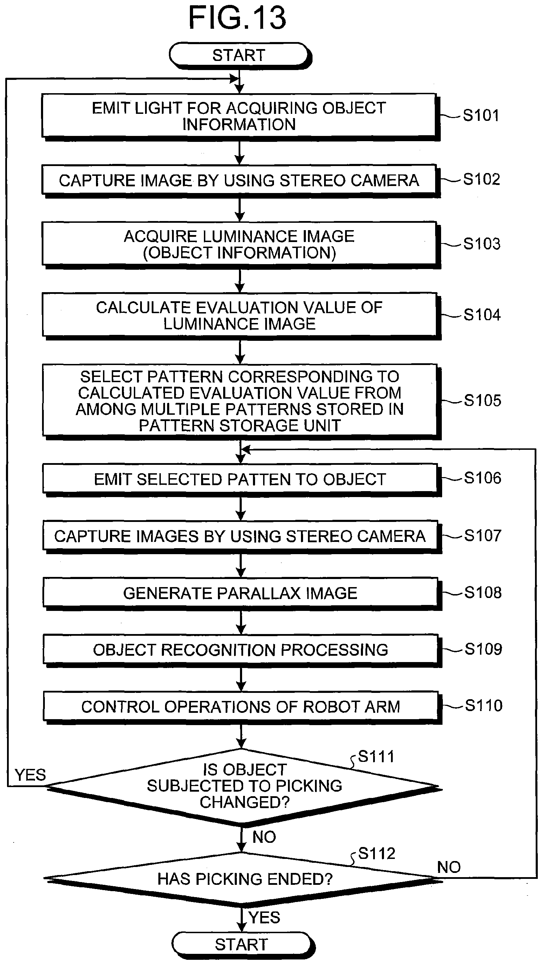

Operations of the picking system 1 will be described here with reference to FIG. 13. FIG. 13 is a flowchart illustrating the flow of operations of the picking system 1.

When the picking system 1 starts running, first, the pattern projector 3 emits light for acquiring objet information to an object subjected to picking (step S101). The stereo camera 2 then captures an image of the object, serving as a subject to be imaged, to which the light for acquiring object information is emitted (step S102) and the object information acquisition unit 410 of the information processing device 4 acquires a luminance image of the object captured at step S102 as object information (step S103).

The pattern selection unit 420 of the information processing device 4 then calculates an evaluation value of the luminance image acquired at step S103 (step S104) and selects a pattern corresponding to the evaluation value calculated at step S104 from among the multiple patterns stored in the pattern storage unit 430 (step S105).

The pattern projector 3 emits the pattern selected at step S105 to the object subjected to picking (step S106) and the stereo camera 2 captures images of the object, serving as a subject to be imaged, to which the pattern is emitted (step S107). The parallax image generation unit 230 of the stereo camera 2 then generates a parallax image based on two images (a reference image and a comparison image) that are captured at step S107 (step S108).

The recognition processing unit 440 of the information processing device 4 performs processing of recognizing the object based on the images captured at step S107 and the parallax image generated at step S108 (step S109) and the arm control device 5 controls the operations of the robot arm 6 on the basis of the result of the recognition to perform picking on the object (step S110).

Thereafter, it is determined whether the object subjected to picking is changed (step Sill) and, when the object subjected to picking is changed (YES at step S111), the process from step S101 is repeated. When the object subjected to picking is not changed (NO at step Sill), it is determined whether picking on all objects has ended (step S112). When there is an object on which picking has not ended (NO at step S112), the process returns to step S106 and the process from step S106 is repeated. When picking on all objects has ended (YES at step S112), the picking system 1 ends running.

As described in detail by exemplifying the specific example, the picking system 1 according to the embodiment acquires object information reflecting the characteristics of an object subjected to picking, selects a pattern corresponding to the acquired object information from among the predetermined multiple patterns, emits the pattern to the object, and generates a parallax image from two or more captured images of the object to which the pattern is emitted. Accordingly, the picking system 1 according to the embodiment can emit the optimum pattern matching the characteristics of the object subjected to picking and accordingly generate the accurate parallax image in a short time, which shortens the takt time required for the object picking operation and thus increases the work efficiency. Particularly, in the configuration of the conventional technology in which multiple patterns are emitted while being switched and multiple parallax images are combined in order to generate an accurate parallax image, processes of switching the pattern and generating and combining multiple parallax images are performed during the object picking operation, which increases the time required to obtain an accurate parallax image and increases the takt time of the picking operation. On the contrary, the picking system 1 according to the embodiment optimizes the pattern before starting the objet picking operation and accordingly an accurate parallax image can be generated in a short time after the picking operation is started, which shortens the takt time of the picking operation.

First Modification

A first modification of the embodiment will be described here. The first modification is an example where a light detector that receives light reflected from, or transmitted through, an object to which light for acquiring object information is emitted is additionally provided and the amount of the light received by the light detector is acquired as object information. The configuration excluding this aspect is the same as that of the embodiment and only the difference from the embodiment will be described below.

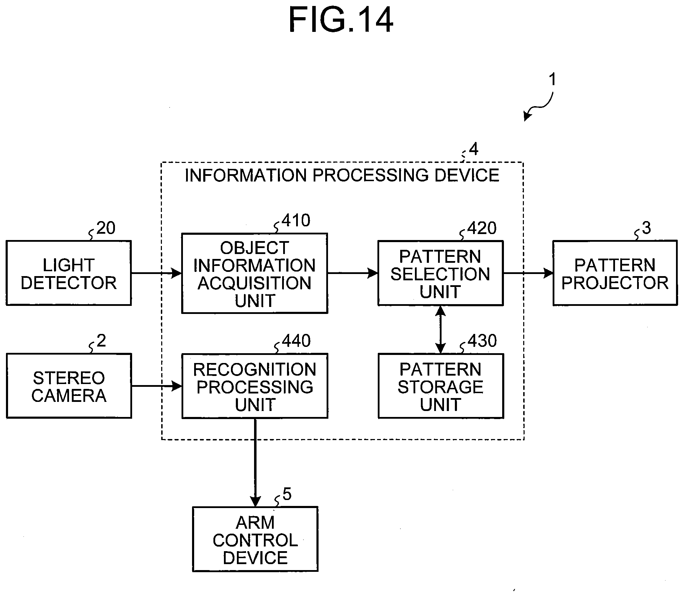

FIG. 14 is a block diagram illustrating the configuration of the first modification. As shown in FIG. 14, the first modification is configured by adding a light detector 20 (light receiving unit) to the configuration of the picking system 1 according to the embodiment (see FIG. 7).

The light detector 20 receives light reflected from, or transmitted through, the object to which light for acquiring object information is emitted and outputs an electric signal corresponding to the amount of the received light. When the light detector 20 is to detect the light reflected from the object, the light detector 20 is disposed in the position where specularly reflected light of the light for acquiring object information emitted from the pattern projector 3 to the object is received. When the light detector 20 is to detect the light transmitted through the object, the light detector 20 is disposed in a part serving as the background of the object (the bottom surface of the conveying tray 7 in the case where the object is placed in the conveying tray 7 as shown in FIG. 5). The electric signal output by the light detector 20, i.e., the signal representing the amount of the light reflected from, or transmitted through, the object, is input to the information processing device 4.

According to the first modification, the object information acquisition unit 410 of the information processing device 4 acquires, as the object information, the amount of the light reflected from, or transmitted through, the object that is received by the light detector 20. In other words, before the picking system 1 starts the object picking operation, or when the objet subjected to picking is switched, the object information acquisition unit 410 outputs, to the pattern projector 3, a control command of an instruction for emitting light for acquiring object information and causes the light detector 20 to run. The object information acquisition unit 410 then reads the signal output from the light detector 20 when the light for acquiring object information is emitted from the pattern projector 3 to the object and acquires, as the object information, the amount of the light reflected from, or transmitted through the object represented by the signal.

The amount of light reflected from, or transmitted through, the object obtained when the light for acquiring object information is emitted to the object reflects the light transmittance of the object. In other words, as the light transmittance of the object lowers, the light reflecting on the object is intensified and accordingly the amount of the reflecting light increases and the amount of the transmitted light decreases. On the contrary, as the light transmittance of the object increases, the light reflecting on the surface of the object is weakened and accordingly the amount of the reflecting light decreases and the amount of the transmitted light increases. For this reason, acquiring the amount of light reflected from, or transmitted through, the object that is received by the light detector 20 as the object information enables selection of an optimum pattern according to the light transmittance of the object as in the case of the above-described embodiment.

Second Modification

A second modification of the embodiment will be described here. The second modification is an example where a laser light source that emits laser light for examination is emitted to an object subjected to picking and a laser light detector that receives the laser light reflected from, or transmitted through, the object are additionally provided and the amount of the laser light received by the light detector is acquired as object information. The configuration excluding this aspect is the same as that of the embodiment and only the difference from the embodiment will be described below.

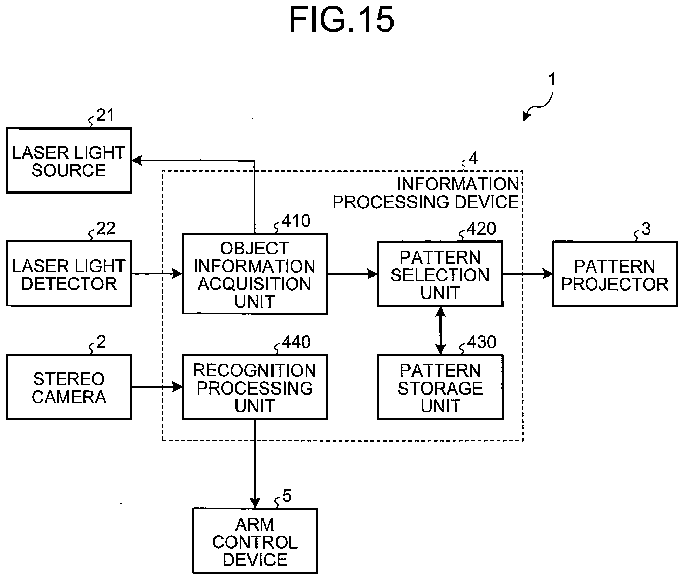

FIG. 15 is a block diagram illustrating the configuration of the second modification. As shown in FIG. 15, the second modification is configured by adding a laser light source 21 (laser emission unit) and a laser light detector 22 (laser light receiving unit) to the configuration of the picking system 1 according to the embodiment (see FIG. 7).

The laser light source 21 emits laser light to an object subjected to picking according to, for example, a light emission instruction that is output from the object information acquisition unit 410 of the information processing device 4. When the laser light source 21 is to emit laser light to an object, the object may be placed in a position different from the position where the stereo camera 2 images the object. In other words, the laser light source 21 may be configured to emit laser light to an object placed in a position different from that where the stereo camera 2 images the object.

The laser light detector 22 receives the laser light reflected from, or transmitted through, the object and outputs an electric signal corresponding to the amount of the received laser light. When the laser light detector 22 is to detect the laser light reflected from the object, the laser light detector 22 is disposed in the position where specularly reflected light of the laser light emitted from the laser light source 21 to the object is received. When the laser light detector 22 is to detect the laser light transmitted through the object, the laser light detector 22 is disposed in a position opposed to the laser light source 21 with the object in between. The electric signal output by the laser light detector 22, i.e., the signal representing the amount of the laser light reflected from, or transmitted through, the object, is input to the information processing device 4.

According to the second modification, the object information acquisition unit 410 of the information processing device 4 acquires, as object information, the amount of the laser light received by the laser light detector 22. In other words, for example, before the picking system 1 starts the object picking operation, or when the objet subjected to picking is switched, the object information acquisition unit 410 outputs a light emission command to the laser light source 21 and causes the laser light detector 22 to run. The object information acquisition unit 410 then reads the signal output from the laser light detector 22 when the laser light is emitted from the laser light source 21 to the object and acquires, as the object information, the amount of the laser light represented by the signal (the amount of light received by the laser light detector 22).

The amount of the laser light reflected from, or transmitted through, the object reflects the light transmittance of the object. In other words, the amount of laser light reflecting on the object increases as the light transmittance of the object decreases and the amount of the laser light transmitted through the object decreases. On the contrary, as the light transmittance of the object increases, the amount of the laser light reflecting on the object decreases and the amount of the laser light transmitted through the object increases. For this reason, acquiring the amount of the laser light received by the laser light detector 22 as the object information enables selection of an optimum pattern according to the light transmittance of the object as in the case of the above-described embodiment.

Third Modification

A third modification of the embodiment will be described. The third modification is an example where object information reflecting at least any one of the size, shape and color as the characteristics of an object is acquired. For such object information, for example, as in the case of the embodiment, a luminance image of the object that is captured by the stereo camera 2 in the state where light for acquiring object information is being emitted from the pattern projector 3 to the object may be used. Generating, for the luminance image of the object, an edge image by using a known image processing technique enables determination of the size and shape of the object. Furthermore, it is possible to determine the color of the object on the basis of an RGB three-channel luminance image.

It is assumed that, in the third modification, information on granularity and contrast serving as parameters for optimum patterns is stored in association with the characteristics of each object, such as the size, shape, color, etc., in the pattern storage unit 430. The pattern selection unit 420 selects, as a pattern to be emitted to the object, a pattern having the granularity and contrast associated with the size, shape, and color of the object determined from the object information, such as a luminance image of the object. The configuration excluding this aspect is the same as that of the above-described embodiment and only the difference from the embodiment will be described below.

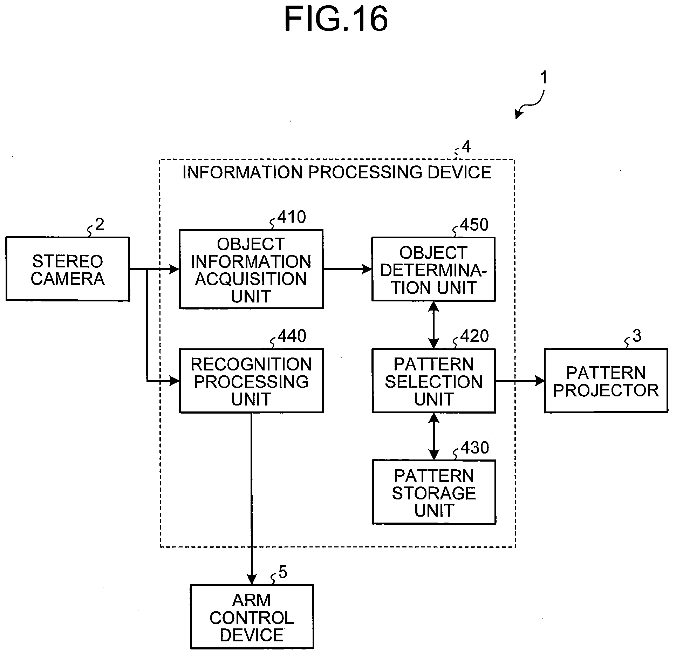

FIG. 16 is a block diagram illustrating the configuration of the third modification. As shown in FIG. 16, the third modification is configured by adding an object determination unit 450 as a functional component realized by the information processing device 4 to the configuration of the picking system according to the embodiment (see FIG. 7).

On the basis of the luminance image of the object acquired as the object information by the object information acquisition unit 410 from the stereo camera 2, the object determination unit 450 determines a characteristic that is any one of the size, shape, color of the object subjected to picking according to the above-described method. The result of the determination made by the object determination unit 450 is passed to the pattern selection unit 420.

In the third modification, using the result of the determination made by the object determination unit 450, the pattern selection unit 420 of the information processing device 4 selects a pattern optimum to the object subjected to picking from among multiple patterns stored in the pattern storage unit 430. The pattern storage unit 430 stores a table Tb that associates, for all objects registered in advance as objects that may be subjected to picking, the object ID for identifying the object, size information, shape information and color information on the object, and information on granularity and contrast of a pattern optimum to the object. The pattern selection unit 420 refers to the table Tb stored in the pattern storage unit 430, specifies the object having the characteristic determined by the object determination unit 450, and selects a pattern having the granularity or contrast corresponding to the object as the pattern optimum to the object subjected to picking.

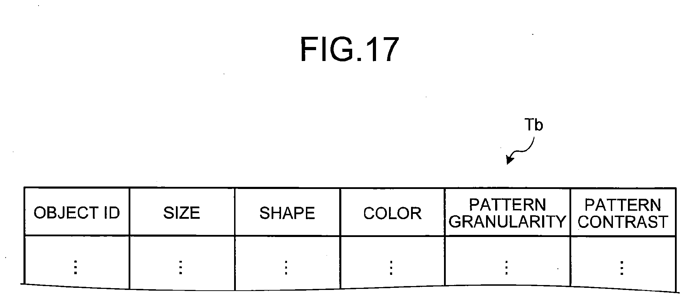

The luminance image of the object captured by the stereo camera 2 is exemplified as the object information here; however, it suffices if the object information acquired by the object information acquisition unit 410 is information reflecting at least any one of the size, shape and color of the object, i.e., the object information is not limited to the luminance image of the object. In a configuration where an operator has a user interface enabling input of information on an object subjected to picking, the information input by the operator may be acquired as the object information. For example, a configuration may be employed in which a list of objects registered in advance as objects that may be subjected to picking is displayed on the screen of a display, and an operation by an operator for specifying an arbitrary object from the list is accepted, a table Tb like that exemplified in FIG. 17 is referred to, and a pattern having the granularity and contrast corresponding to the object specified by the operator is selected as the pattern optimum to the object subjected to picking.

Supplementary Description

The functional components of the information processing device 4 in the embodiment and its various modifications descried above (the object information acquisition unit 410, the pattern selection unit 420, the recognition processing unit 440, the object determination unit 450, etc.) may be realized by the CPU 12 shown in FIG. 6 by executing a program that is stored in the ROM 13 or a hard disk device and using the RAM 14 as a work area. In this case, the program is provided by recording the program in a non-transitory computer-readable recording medium, such as a CD-ROM, a flexible disk (FD), a CD-R, or a DVD, in a file in a format that can be installed in or executable by the information processing device 4. The program may be provided by storing the program in a computer connected to a network, such as the Internet, and downloading the program into the information processing device 4 via the network. Furthermore, the program may be provided or distributed via a network, such as the Internet. The program may be provided by previously installing the program in the ROM 13 in the information processing device 4.

All or part of the functional components of the information processing device 4 in the descriptions of the embodiment and its various modifications may be realized by using a dedicated hardware, such as an application specific integrated circuit (ASIC) or a FPGA. Furthermore, all or part of the functional components of the information processing device 4 in the embodiment and its various modifications may be provided to a device, such as the stereo camera 2 or the pattern projector 3, other than the information processing device 4.

The specific embodiment of the invention has been described and the above-described embodiment is an exemplary application of the present invention. The invention is to be construed as not being limited to the above-described embodiment. The invention may be modified by adding various modifications and changes within the scope of the invention when carried out. For example, for the embodiment, the configuration is exemplified where the two image capturing units 10a and 10b of the stereo camera 2 realize the reference image capturing unit 210 and the comparison image capturing unit 220. Alternatively, a configuration may be employed where a camera independent of the stereo camera 2 that includes the parallax image generation unit 230 is connected to the stereo camera 2 and the independent camera realizes at least one of the reference image capturing unit 210 and the comparison image capturing unit 220. Furthermore, the function of the parallax image generation unit 230 of the stereo camera 2 may be provided to another device, such as the information processing device 4 or the pattern projector 3, other than the stereo camera 2. In other words, the reference image capturing unit 210 and the comparison image capturing unit 220 may be connected to the information processing device 4 having the functions of the parallax image generation unit 230.

According to the embodiments of the present invention, there is an effect that an accurate parallax image can be generated in a short time.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A parallax image generation system comprising:

   an acquisition unit (410) configured to acquire a captured image obtained by light reflected from an object illuminated by uniform brightness light, wherein the captured image is a luminance image of the object including object information;
   a selection unit (420) configured to select a pattern corresponding to the captured image of the object acquired by the acquisition unit (410) from among multiple predetermined patterns based on a calculated evaluation value of the captured image;
   a pattern emission unit (3) configured to illuminate the object with the pattern selected by the selection unit (420);
   two or more image capturing units (220) configured to capture two or more images of the object to which the pattern is emitted; and
   a generation unit (230) configured to generate a parallax image from the two or more images captured by the two or more image capturing units (220);
   wherein
   the selection unit (420) is arranged to calculate the evaluation value from the luminance image of the object, the evaluation value reflecting the light transmittance of the object.

2. The parallax image generation system according to claim 1, wherein the selection unit (420) is configured to select, when the evaluation value of the captured image is higher than a threshold, a pattern having granularity more coarse than that of a pattern selected when the evaluation value is equal to or smaller than the threshold.

3. The parallax image generation system according to claim 1 or 2, wherein the selection unit (420) is configured to select, when an evaluation value of the captured image is higher than a threshold, a pattern having a contrast higher than that of a pattern selected when the evaluation value is equal to or smaller than the threshold.

**4.** The parallax image generation system according to any one of claims 1 to 3, wherein
the pattern emission unit (3) is configured to emit the uniform brightness light to the object before emitting the pattern selected by the selection unit (420) to the object.

**5.** The parallax image generation system according to claim 4, wherein
the parallax image generation system further comprises a light receiving unit (20) configured to receive the light that is reflected from, or transmitted through, the object to which the light is illuminated.

**6.** The parallax image generation system according to any one of claims 1 to 3, further comprising:

a laser emission unit (21) configured to emit laser light to the object; and
a laser light receiving unit (22) configured to receive the laser light reflected from, or transmitted through, the object,
wherein the acquisition unit (410) acquires, as the object information, the amount of the laser light received by the laser light receiving unit (22).

**7.** The parallax image generation system according to claim 1, wherein
the acquisition unit (410) acquires the object information reflecting at least any one of the size, shape and color of the object as the characteristic of the object.

**8.** The parallax image generation system according to claim 7, wherein
the pattern emission unit (3) emits light for acquiring object information to the object before emitting the pattern selected by the selection unit (420) to the object, and
the acquisition unit (410) acquires, as the object information reflecting at least any one of the size, shape and color of the object, an image of the object to which the light for acquiring object information is emitted, which is an image captured by the image capturing unit (220).

**9.** A picking system comprising:

the parallax image generation system according to any one of claims 1 to 8;
a recognition unit (440) configured to recognize the object on the basis of the parallax image generated by the parallax image generation system; and
a picking unit (5) configured to perform picking on the object according to an output of the recognition unit (440).

**10.** A parallax image generation method comprising:

acquiring a captured image obtained by light reflected from an object illuminated by uniform brightness light, wherein the captured image is a luminance image of the object including object information;
selecting a pattern corresponding to the captured image of the object from among multiple predetermined patterns based on a calculated evaluation value of the captured image;
illuminating the object with the selected pattern;
capturing two or more images of the object to which the pattern is emitted by means of two or more image capturing units; and
generating a parallax image from said two or more images;
wherein
the evaluation value is calculated from the luminance image of the object and reflects the light transmittance of the object.

**11.** A computer program comprising code means that when executed by an information processing device (4) of a parallax image generation system according to claims 1 to 8, instructs the parallax image generation system to perform the steps of the method according to claim 10.

**Patentansprüche**

**1.** Parallaxenbilderzeugungssystem, das Folgendes umfasst:

eine Übernahmeeinheit (410), die dazu ausgelegt ist, ein erfasstes Bild, das durch Licht erhalten wird, das von einem Objekt reflektiert wird, das von Licht einheitlicher Helligkeit beleuchtet wird, zu übernehmen, wobei das erfasste Bild ein Luminanzbild des Objekts ist, das Objektinformationen beinhaltet;

eine Auswahleinheit (420), die dazu ausgelegt ist, auf Basis eines berechneten Beurteilungswerts des erfassten Bildes ein Muster, das dem erfassten Bild des Objekts entspricht, das von der Übernahmeeinheit (410) übernommen wurde, aus mehreren vorbestimmten Mustern auszuwählen;

eine Musteremissionseinheit (3), die dazu ausgelegt ist, das Objekt mit dem von der Auswahleinheit (420) ausgewählten Muster zu beleuchten;

zwei oder mehr Bilderfassungseinheiten (220), die dazu ausgelegt sind, zwei oder mehr Bilder des Objekts, zu dem das Muster emittiert wird, zu erfassen; und

eine Erzeugungseinheit (230), die dazu ausgelegt ist, von den zwei oder mehr Bildern, die von den zwei oder mehr Bilderfassungseinheiten (220) erfasst werden, ein Parallaxenbild zu erzeugen;

wobei

die Auswahleinheit (420) angeordnet ist, den Beurteilungswert anhand des Luminanzbildes des Objekts zu berechnen, wobei der Beurteilungswert die Lichttransmittanz des Objekts reflektiert.

2. Parallaxenbilderzeugungssystem nach Anspruch 1, wobei
die Auswahleinheit (420) dazu ausgelegt ist, wenn der Beurteilungswert des erfassten Bildes höher als ein Schwellwert ist, ein Muster auszuwählen, das eine Granularität aufweist, die grober ist als die eines Musters, das ausgewählt wird, wenn der Beurteilungswert kleiner als der Schwellwert ist oder mit diesem übereinstimmt.

3. Parallaxenbilderzeugungssystem nach Anspruch 1 oder 2, wobei
die Auswahleinheit (420) dazu ausgelegt ist, wenn ein Beurteilungswert des erfassten Bildes höher als ein Schwellwert ist, ein Muster auszuwählen, das einen Kontrast aufweist, der größer ist als der eines Musters, das ausgewählt wird, wenn der Beurteilungswert kleiner als der Schwellwert ist oder mit diesem übereinstimmt.

4. Parallaxenbilderzeugungssystem nach einem der Ansprüche 1 bis 3, wobei die Musteremissionseinheit (3) dazu ausgelegt ist, das Licht einheitlicher Helligkeit zum Objekt zu emittieren, bevor das Muster, das von der Auswahleinheit (420) ausgewählt wurde, zum Objekt emittiert wird.

5. Parallaxenbilderzeugungssystem nach Anspruch 4, wobei
das Parallaxenbilderzeugungssystem ferner eine Lichtaufnahmeeinheit (20) umfasst, die dazu ausgelegt ist, das Licht, das vom Objekt, das vom Licht beleuchtet wird, reflektiert oder durch dieses übertragen wird, aufzunehmen.

6. Parallaxenbilderzeugungssystem nach einem der Ansprüche 1 bis 3, das ferner Folgendes umfasst:

eine Laseremissionseinheit (21), die dazu ausgelegt ist, Laserlicht zum Objekt zu emittieren; und
eine Laserlichtaufnahmeeinheit (22), die dazu ausgelegt ist, das Laserlicht, das vom Objekt reflektiert oder durch dieses übertragen wird, aufzunehmen,
wobei die Übernahmeeinheit (410) die Menge des von der Laserlichtaufnahmeeinheit (22) aufgenommenen Laserlichts als die Objektinformationen übernimmt.

7. Parallaxenbilderzeugungssystem nach Anspruch 1, wobei
die Übernahmeeinheit (410) die Objektinformationen, die mindestens eines der Größe, der Form und der Farbe des Objekts reflektieren, als die Eigenschaft des Objekts übernimmt.

8. Parallaxenbilderzeugungssystem nach Anspruch 7, wobei
die Musteremissionseinheit (3) Licht zum Übernehmen von Objektinformationen zum Objekt emittiert, bevor das Muster, das von der Auswahleinheit (420) ausgewählt wurde, zum Objekt emittiert wird, und
die Übernahmeeinheit (410) als die Objektinformationen, die mindestens eines der Größe, der Form und der Farbe des Objekts reflektieren, ein Bild des Objekts übernimmt, zu dem das Licht zum Übernehmen der Objektinformationen emittiert wird, bei dem es sich um ein Bild handelt, das von der Bilderfassungseinheit (220) erfasst wurde.

9. Entnahmesystem, das Folgendes umfasst:

das Parallaxenbilderzeugungssystem nach einem der Ansprüche 1 bis 8;
eine Erkennungseinheit (440), die dazu ausgelegt ist, das Objekt auf Basis des Parallaxenbildes, das vom Parallaxenbilderzeugungssystem erzeugt wurde, zu erkennen; und
eine Entnahmeeinheit (5), die dazu ausgelegt ist, gemäß einer Ausgabe der Erkennungseinheit (440) eine

EP 3 062 516 B1

Entnahme am Objekt durchzuführen.

10. Parallaxenbilderzeugungsverfahren, das Folgendes umfasst:

Übernehmen eines erfassten Bildes, das durch Licht erhalten wird, das von einem Objekt reflektiert wird, das von Licht einheitlicher Helligkeit beleuchtet wird, wobei das erfasste Bild ein Luminanzbild des Objekts ist, das Objektinformationen beinhaltet;
Auswählen auf Basis eines berechneten Beurteilungswerts des erfassten Bildes eines Musters, das dem erfassten Bild des Objekts entspricht, aus mehreren vorbestimmten Mustern;
Beleuchten des Objekts mit dem ausgewählten Muster;
Erfassen von zwei oder mehr Bildern des Objekts, zu dem das Muster mittels zweier oder mehr Bilderfassungseinheiten emittiert wird; und
Erzeugen eines Parallaxenbildes aus den zwei oder mehr Bildern; wobei
der Beurteilungswert anhand des Luminanzbildes des Objekts berechnet wird und die Lichttransmittanz des Objekts reflektiert.

11. Computerprogramm, das Codemittel umfasst, die, wenn sie von einer Informationsverarbeitungsvorrichtung (4) eines Parallaxenbilderzeugungssystems nach Anspruch 1 bis 8 ausgeführt werden, das Parallaxenbilderzeugungssystem anweisen, die Schritte des Verfahrens nach Anspruch 10 durchzuführen.

**Revendications**

1. Système de génération d'image parallaxe, comprenant :

une unité d'acquisition (410) configurée pour acquérir une image capturée obtenue par de la lumière réfléchie à partir d'un objet éclairé par de la lumière de luminosité uniforme, dans lequel l'image capturée est une image de luminance de l'objet incluant des informations d'objet ;
une unité de sélection (420) configurée pour sélectionner un motif correspondant à l'image capturée de l'objet acquise par l'unité d'acquisition (410) parmi de multiples motifs prédéterminés sur la base d'une valeur d'évaluation calculée de l'image capturée ;
une unité d'émission de motif (3) configurée pour éclairer l'objet avec le motif sélectionné par l'unité de sélection (420) ;
deux, ou plus, unités de capture d'image (220) configurées pour capturer deux, ou plus, images de l'objet sur lequel le motif est émis ; et
une unité de génération (230) configurée pour générer une image parallaxe à partir des deux, ou plus, images capturées par les deux, ou plus, unités de capture d'image (220) ;
dans lequel
l'unité de sélection (420) est agencée pour calculer la valeur d'évaluation à partir de l'image de luminance de l'objet, la valeur d'évaluation reflétant la transmittance de lumière de l'objet.

2. Système de génération d'image parallaxe selon la revendication 1, dans lequel
l'unité de sélection (420) est configurée pour sélectionner, lorsque la valeur d'évaluation de l'image capturée est supérieure à un seuil, un motif possédant une granularité plus grossière que celle d'un motif sélectionné lorsque la valeur d'évaluation est égale ou inférieure au seuil.

3. Système de génération d'image parallaxe selon la revendication 1 ou 2, dans lequel
l'unité de sélection (420) est configurée pour sélectionner, lorsqu'une valeur d'évaluation de l'image capturée est supérieure à un seuil, un motif possédant un contraste supérieur à celui d'un motif sélectionné lorsque la valeur d'évaluation est égale ou inférieure au seuil.

4. Système de génération d'image parallaxe selon l'une quelconque des revendications 1 à 3, dans lequel
l'unité d'émission de motif (3) est configurée pour émettre la lumière de luminosité uniforme sur l'objet avant d'émettre le motif sélectionné par l'unité de sélection (420) sur l'objet.

5. Système de génération d'image parallaxe selon la revendication 4, dans lequel
le système de génération d'image parallaxe comprend en outre une unité de réception de lumière (20) configurée pour recevoir la lumière qui est réfléchie à partir de, ou transmise à travers, l'objet que la lumière éclaire.

**6.** Système de génération d'image parallaxe selon l'une quelconque des revendications 1 à 3, comprenant en outre :

une unité d'émission laser (21) configurée pour émettre de la lumière laser sur l'objet ; et
une unité de réception de lumière laser (22) configurée pour recevoir la lumière laser réfléchie à partir de, ou transmise à travers, l'objet,
dans lequel l'unité d'acquisition (410) acquiert, en tant qu'informations d'objet, la quantité de la lumière laser reçue par l'unité de réception de lumière laser (22).

**7.** Système de génération d'image parallaxe selon la revendication 1, dans lequel
l'unité d'acquisition (410) acquiert les informations d'objet reflétant au moins l'une quelconque de la taille, de la forme et de la couleur de l'objet en tant que caractéristique de l'objet.

**8.** Système de génération d'image parallaxe selon la revendication 7, dans lequel
l'unité d'émission de motif (3) émet de la lumière, pour acquérir des informations d'objet, sur l'objet avant d'émettre le motif sélectionné par l'unité de sélection (420) sur l'objet, et
l'unité d'acquisition (410) acquiert, en tant qu'informations d'objet reflétant au moins l'une quelconque de la taille, de la forme et de la couleur de l'objet, une image de l'objet sur lequel la lumière pour acquérir des informations d'objet est émise, qui est une image capturée par l'unité de capture d'image (220).

**9.** Système de captage, comprenant :

le système de génération d'image parallaxe selon l'une quelconque des revendications 1 à 8 ;
une unité de reconnaissance (440) configurée pour reconnaître l'objet sur la base de l'image parallaxe générée par le système de génération d'image parallaxe ; et
une unité de captage (5) configurée pour réaliser un captage sur l'objet selon une sortie de l'unité de reconnaissance (440).

**10.** Procédé de génération d'image parallaxe, comprenant :

l'acquisition d'une image capturée obtenue par de la lumière réfléchie à partir d'un objet éclairé par de la lumière de luminosité uniforme, dans lequel l'image capturée est une image de luminance de l'objet incluant des informations d'objet ;
la sélection d'un motif correspondant à l'image capturée de l'objet parmi de multiples motifs prédéterminés sur la base d'une valeur d'évaluation calculée de l'image capturée ;
l'éclairage de l'objet avec le motif sélectionné ;
la capture de deux, ou plus, images de l'objet sur lequel le motif est émis au moyen de deux, ou plus, unités de capture d'image ; et
la génération d'une image parallaxe à partir desdites deux, ou plus, images ; dans lequel
la valeur d'évaluation est calculée à partir de l'image de luminance de l'objet et reflète la transmittance de lumière de l'objet.

**11.** Programme d'ordinateur comprenant un moyen code qui, lorsqu'il est exécuté par un dispositif de traitement d'informations (4) d'un système de génération d'image parallaxe selon les revendications 1 à 8, donne l'instruction au système de génération d'image parallaxe de réaliser les étapes du procédé selon la revendication 10.

# FIG.1

# FIG.2

(a)

(b)

EPIPOLAR LINE EL

Ia

Ib

$p\,(x,\,y)$

$q\,(x+d,\,y)$

$d$

# FIG.3

# FIG.4

| PATTERN TO BE EMITTED | | NON-TRANSPARENT OBJECT | TRANSLUCENT OBJECT |
|---|---|---|---|
| FINE GRANULARITY | LUMINANCE IMAGE | | |
| | PARALLAX IMAGE | | |
| COARSE GRANULARITY | LUMINANCE IMAGE | | |
| | PARALLAX IMAGE | | |

# FIG.5

# FIG.6

# FIG.7

STEREO CAMERA — 2

REFERENCE IMAGE CAPTURING UNIT — 210

COMPARISON IMAGE CAPTURING UNIT — 220

PARALLAX IMAGE GENERATION UNIT — 230

INFORMATION PROCESSING DEVICE — 4

OBJECT INFORMATION ACQUISITION UNIT — 410

PATTERN SELECTION UNIT — 420

RECOGNITION PROCESSING UNIT — 440

PATTERN STORAGE UNIT — 430

PATTERN PROJECTOR — 3

ARM CONTROL DEVICE — 5

1

EP 3 062 516 B1

# FIG.8

PARALLAX IMAGE GENERATION UNIT $\underset{\sim}{230}$

REFERENCE IMAGE → FILTER UNIT $\underset{\sim}{231}$

COMPARISON IMAGE → FILTER UNIT $\underset{\sim}{232}$

COST CALCU-LATOR $\underset{\sim}{233}$

$\vdots$

C (p, d-2)

C (p, d-1)

C (p, d)

C (p, d+1)

C (p, d+2)

$\vdots$

INTEGER PARALLAX CALCU-LATOR $\underset{\sim}{234}$

$\Delta$ (p)

C (p, $\Delta$-2)

C (p, $\Delta$-1)

C (p, $\Delta$ )

C (p, $\Delta$+1)

C (p, $\Delta$+2)

DECIMAL PARALLAX CALCU-LATOR $\underset{\sim}{235}$

$\delta$ (p) → PARALLAX IMAGE

# FIG.9

DECIMAL PARALLAX $\delta$ AFTER
ESTIMATION OF SUBPIXEL

# FIG.10

# FIG.11

# FIG.12

EP 3 062 516 B1

# FIG.13

START

EMIT LIGHT FOR ACQUIRING OBJECT INFORMATION — S101

CAPTURE IMAGE BY USING STEREO CAMERA — S102

ACQUIRE LUMINANCE IMAGE (OBJECT INFORMATION) — S103

CALCULATE EVALUATION VALUE OF LUMINANCE IMAGE — S104

SELECT PATTERN CORRESPONDING TO CALCULATED EVALUATION VALUE FROM AMONG MULTIPLE PATTERNS STORED IN PATTERN STORAGE UNIT — S105

EMIT SELECTED PATTEN TO OBJECT — S106

CAPTURE IMAGES BY USING STEREO CAMERA — S107

GENERATE PARALLAX IMAGE — S108

OBJECT RECOGNITION PROCESSING — S109

CONTROL OPERATIONS OF ROBOT ARM — S110

IS OBJECT SUBJECTED TO PICKING CHANGED? — S111

YES

NO

HAS PICKING ENDED? — S112

NO

YES

START

26

# FIG.14

# FIG.15

1

```
  21                                                                    4
LASER LIGHT                                              INFORMATION
  SOURCE                                              PROCESSING DEVICE

  22                         410                          420                 3
LASER LIGHT               OBJECT                       PATTERN           PATTERN
 DETECTOR             INFORMATION                     SELECTION         PROJECTOR
                      ACQUISITION                       UNIT
                         UNIT

   2                         440                          430
 STEREO               RECOGNITION                      PATTERN
 CAMERA                PROCESSING                      STORAGE
                         UNIT                           UNIT


                              5
                            ARM
                          CONTROL
                           DEVICE
```

# FIG.16

# FIG.17

Tb

| OBJECT ID | SIZE | SHAPE | COLOR | PATTERN GRANULARITY | PATTERN CONTRAST |
|-----------|------|-------|-------|---------------------|------------------|
| ⋮ | ⋮ | ⋮ | ⋮ | ⋮ | ⋮ |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001091232 A

- US 2015022644 A

**Non-patent literature cited in the description**

- **LI Q et al.** Two-shot sparse depth estimation using adaptive structured light. *ELECTRONIC LETTERS, THE INSTITUTION OF ENGINEERING AND TECHNOLOGY,* 23 June 2011, vol. 47 (13), ISSN 1350-91 IX, 745-746